# NEW EUROPEAN PATENT SPECIFICATION

(11) **EP 0 632 253 B2**
(45) Date of publication and mention of the opposition decision: **21.04.2004**
(45) Mention of the grant of the patent: 30.08.2000
(21) Application number: 94304453.7
(22) Date of filing: 20.06.1994
(51) Int. Cl.: G01D 5/16, G01D 11/20

(54) **Position sensors**
Positionssensoren
Capteurs de position

(30) Priority: 23.06.1993 US 82140
(43) Date of publication of application: 04.01.1995
(73) Proprietor: CTS Corporation, Elkhart Indiana 46514-1899 (US)
(72) Inventor: Pfaffenberger, David S., County of St. Joseph Indiana 46544 (US)
(74) Representative: Whitten, George Alan

(56) References cited:
- EP-A- 0 157 666
- EP-A- 0 353 395
- DE-A- 4 110 593

## Description

This invention relates generally to position sensors and more especially but not exclusively to a variable resistor position sensor, for example as used in connection with throttle valves for internal combustion engines.

Many internal combustion engines use a throttle valve to control the amount of air entering the engine. This throttle valve is often called a butterfly or throttle flap, and is used in gasoline, diesel and other alternatively fuelled vehides. The throttle valve may either be opened to provide unimpeded air intake through a throttle body or may be closed more or less to restrict the passage of air. By controlling the amount of air that reaches the combustion chamber, the throttle valve forms part of the primary engine speed control. The throttle valve may therefore be mechanically linked to the accelerator pedal or, in some instances, linked thereto through a combination of electrical and mechanical interconnections.

Many efforts are being made to improve the efficiency of internal combustion engines and similarly to reduce the emissions, or pollutants, that are produced by these engines. A vital part of better efficiency and reduced emissions is the electronic control circuitry used with the engines. The electronic circuitry monitors various engine parameters and provides feedback to control the engine. The feedback may be a signal which in some way improves efficiency or reduces emissions. The signal may, for example, be used to control the amount of fuel injected into the engine or the timing of ignition.

A potentiometer is often used to sense the position of the throttle valve. This potentiometer is in some ways similar to volume controls used in radio and television receivers. A voltage is applied across two extreme ends of a resistor, and an intermediate tap is mechanically linked to the device which is to be sensed, the position of the device being determined by the voltage at the intermediate tap.

There exist several stringent requirements placed upon a throttle position sensor that make it different from a volume control. Since the throttle valve is used to control air intake and thereby represent a demand for power, binding of the throttle shaft in an open throttle position could result in life threatening situations. Safety and reliability are essential in automotive applications.

The automotive environmental requirements are also different from a radio or television receiver. The throttle position sensor must reside against the throttle body. Thus, environmental temperatures might, for example, range from -55 to +150 degrees Celsius. Further, the device may be exposed to a number of solvents, road spray, and other adverse conditions associated with engine compartment environments. These requirements diverge greatly from those of the typical volume control.

Examples of conventional throttle position sensors include U.S. Patents No. 4 430 634, No. 4 355 293 and No. 5 133 321. Other examples may be found in U.S. Patents Nos. 4 616 504, 4 621 250, 4 688 420, 4 703 649, 4 715 220, 4 719 795, 4 743 882, 4 812 803, 4 933 661, 5 133 321 and Japanese Patent Publication No. 58-70104.

In the prior art, a lever such as shown in U.S. Patents No. 4 355 293 and No. 4 430 634 or special drives such as shown in U.S. Patent No. 4 616 504 are proposed. These drives ensure that, even in the event of malfunction, the throttle sensor will not retain the throttle valve in an acceleration position, but instead will allow the throttle valve to return to the idle condition. Engagement between the sensor and the throttle shaft has thus necessitated the use of a return spring so that as the throttle shaft returns to idle position, the throttle position sensor also returns and tracks the position of the throttle valve.

The throttle position sensor in the prior art is a free-standing, effectively self-contained device. In addition to the return spring, a well-sealed package including the necessary associated bearings is typically provided. Significant effort has been directed to designing a package that is sealed against the adverse chemicals and moisture that might otherwise damage the sensor.

Inclusion of the spring and bearings into this sealed package has drawbacks. The use of springs requires a fairly robust design. Springs and bearings add expense to the device and increase the cost and hazards of assembly. Additionally, any wear debris that may result from the spring or bearings may be detrimental to the operation of the position sensor.

Other prior art sensors incorporate the sensor directly into the throttle body. Exemplary of this concept are U.S. Patents Nos. 4 649 367, 4 672 356, 4 693 111, 4 718 272, 4 827 884, 4 886 981 and 5 070 728. This concept offers advantage in simplicity. However, there is little control over the element contactor interface, which has been determined to be very important for the life of the unit.

Variations in contact pressure, contact orientation, lube and other similar factors all impair the performance of the device. Further, field replacement is important for service repair, and the service replacement should be of the same quality as the original device. These throttle body incorporated sensors do not have the precise control over lube thickness and composition, protection of vital components while shelved awaiting installation, and control over contactor and element relationships that are desirable features.

The shape of the contactor structure is, for obvious reasons, critical to the performance of the device. Where contactor rakes are used, a bent rake may reduce the life of the device to less than one hundredth the normal life. Yet, in those devices that mount into the throttle wall, the contactor will be exposed during shipment of service parts and will be handled to an undesirable degree during installation.

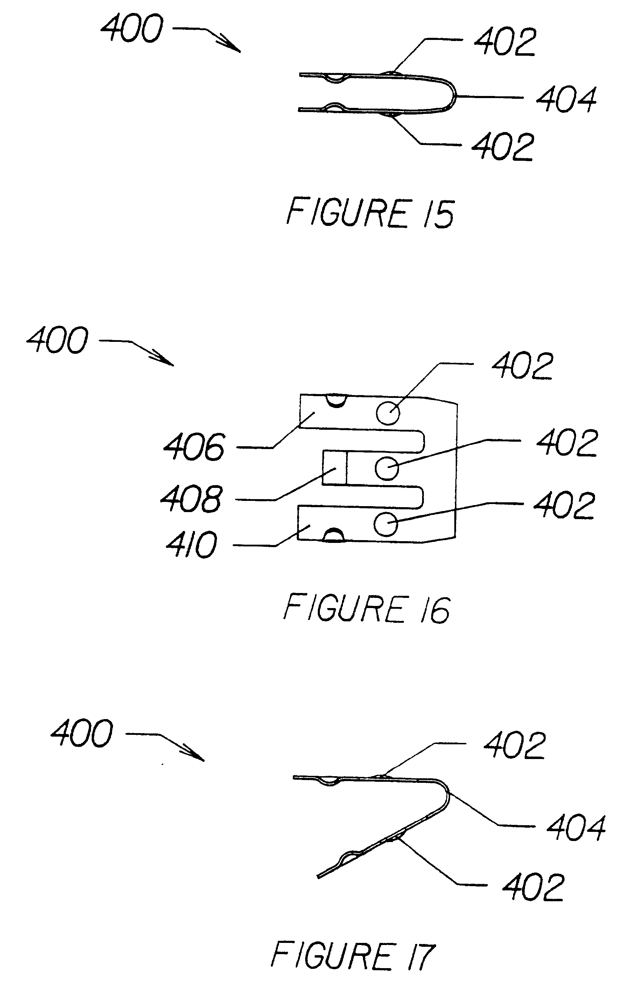

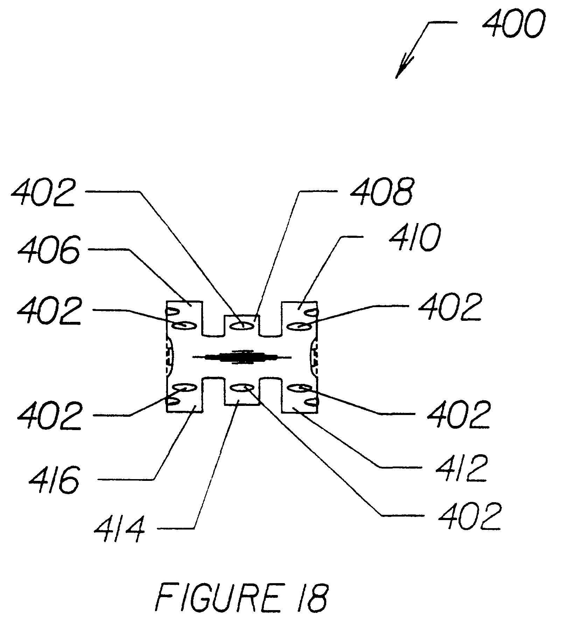

With electronics becoming more prevalent, the ability to sense various engine functions and also in some instances non-engine or indirect engine functions is more desirable. The present invention seeks to overcome the limitations of the prior art sensors and offer a throttle position sensor that delivers substantially improved performance without compromise. Further, while the preferred Figures 15 to 18 illustrate a suitable pressure wedge connector for use in the preferred embodiment.

In the drawings, similar numbering has been used across all figures where like components are shown, to simplify description and review of the preferred embodiment.

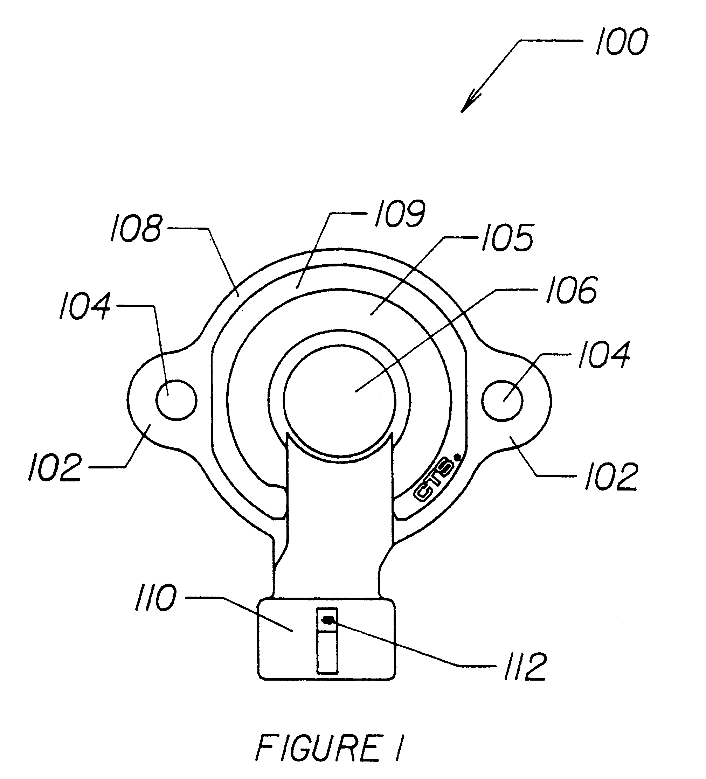

The position sensor is designated generally by the numeral 100. This sensor 100 is shown in Figures 1 to 3 in an "as manufactured" condition prior to installation. O-ring 180, later referred to, is not illustrated for exemplary purposes. The sensor 100 includes mounting ears 102 with holes 104 therethrough. Holes 104 are used by attachment devices (not shown) such as bolts to pass through and attach to a throttle body (not shown). Ears 102 provide easy access, particularly where a hex-head type bolt is used. A rim 108 is provided generally at the outer periphery of the sensor 100, and adjacent rim 108 is a groove 109. The rim 108 and groove 109 provide a relatively stiff periphery to the sensor 100, analogously to an I-beam, while not consuming an excess of material in the manufacture. A dome 105 rises from the rim 108 and the groove 109, forming a wall of the sensor chamber. A second dome 106 rises from the dome 105, forming an outer wall of the rotor chamber. The sensor 100 at a bottom thereof includes an electrical connector wall 110 of generally cylindrical configuration, with a protrusion 112 extending therefrom. This protrusion 112 forms a polarising key to ensure that a mating electrical connector (not shown) is inserted properly. Additionally, the protrusion 112 forms a positive mechanical latch to help retain the mating connector in an engaged position.

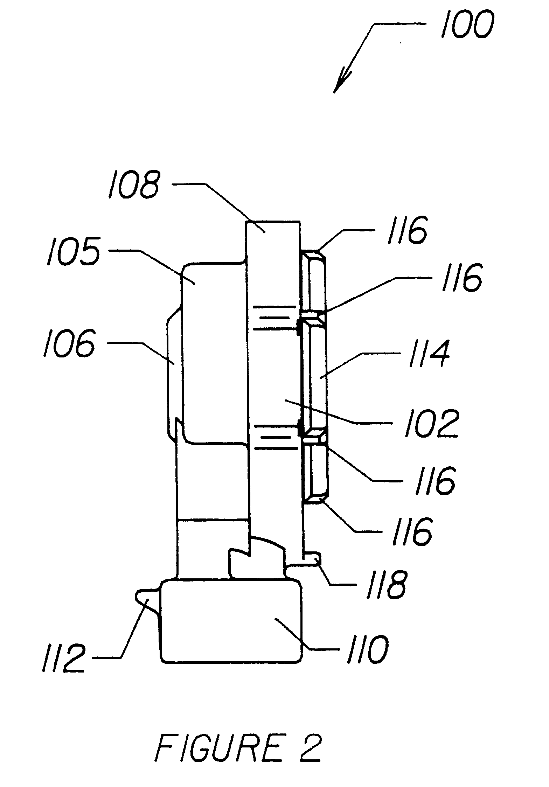

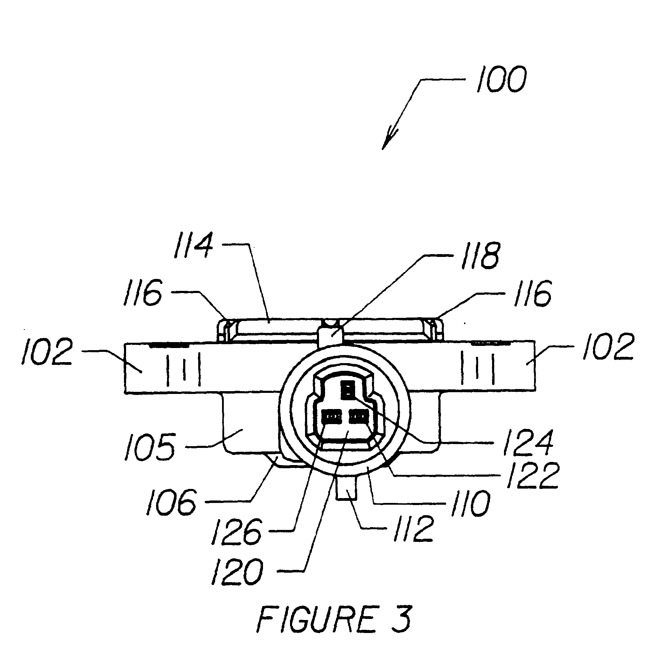

In Figures 2 and 3 several features are visible which are not visible in Figure 1. Adjacent to the electrical connector wall 110 is a locating pin 118, which establishes part orientation upon the throttle body, as well as serving additional purposes.

At the time of installation, an installer will probably be viewing the sensor 100 from an orientation similar to that shown in Figure 1, which is referred to herein as the top for convenience purposes. The part will be mounted against a throttle body, with the bottom opposite that of Figure 1 pressed or abutted with the throttle body. The locating pin 118 inserts into a mating hole, while fasteners extend through the holes 104 in ears 102 and are fastened to suitable structure upon the throttle body. Assuming the fasteners to be bolts, the bolts are then tightened down against the ears 102, bringing the sensor 100 tight against the throttle body. To assist with initial alignment of the many mating features, the sensor 100 further includes tapered guides 116 on the outer circumference of lip 114.

The electrical connector wall 110 partially encloses electrical connector terminals 122, 124 and 126. While male blades are illustrated, there are a wide variety of known types of suitable electrical connectors. Surface 120 may be formed integrally with the housing around the electrical connector terminals 122, 124 and 126, preferably in a sealed manner such as to exclude dirt and other contaminants.

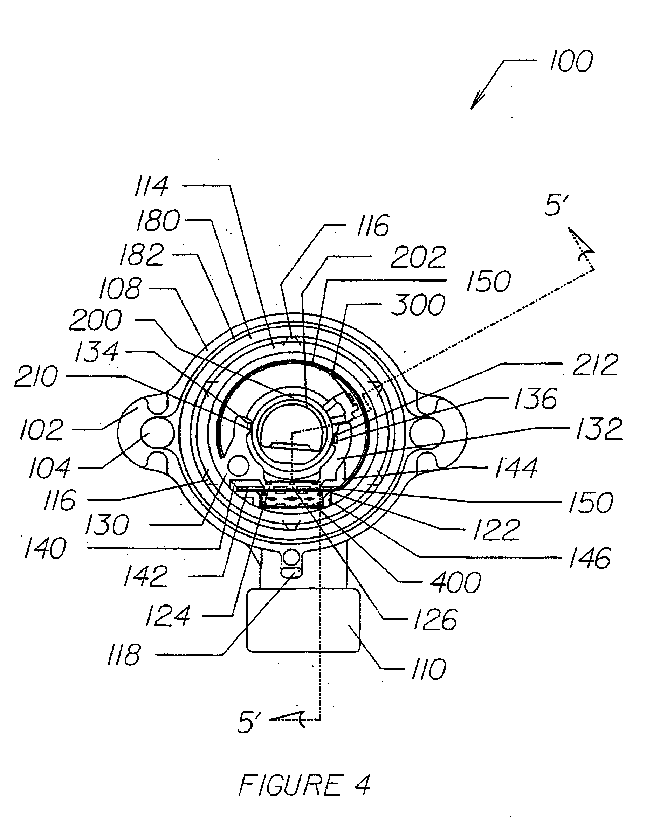

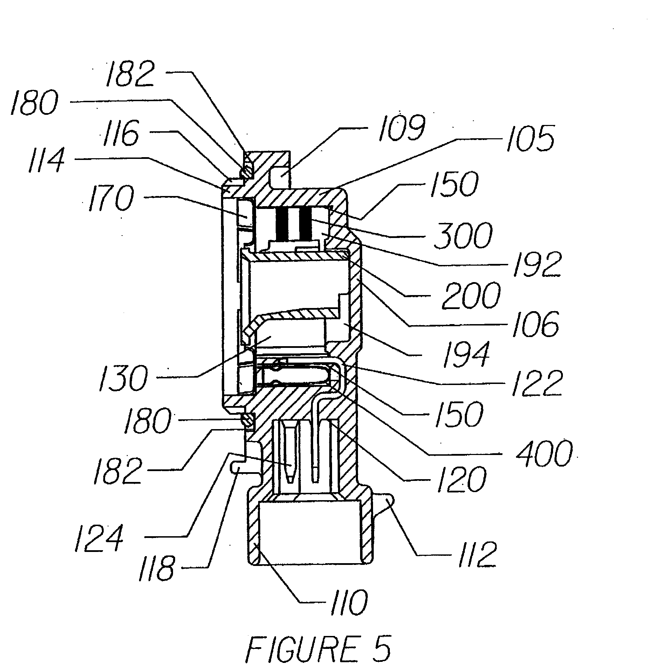

Figures 4 and 5 illustrate the sensor 100 with alterations for viewing purposes that make these parts different from the "as manufactured" views of Figures 1 to 3. In Figure 4, cover 170 (visible in Figure 5) is removed to allow a complete view of the internal components. Figure 5 is a cutaway view of the sensor 100 taken along section line 5' of Figure 4. To avoid duplication, like numbering has been used to Figures 1 to 3, so already discussed components will not be repeated.

The view in Figure 4 is from the bottom side, or the side that will be mounted against the throttle body. As noted, cover 170 is removed to allow a view of each of the internal components. Central in Figure 4 is rotor structure 200 carrying thereon contactor structure 300. The details of each of these structures will be discussed elsewhere.

On a periphery of the rotor 200 are two small protrusions 210 and 212. These protrusions 201 and 212 at the time of manufacture are engaged with indentations 134 and 136 of arms 130 and 132, respectively. At the time of installation, a throttle shaft (not shown) will be inserted into throttle shaft opening 202. The sensor 100 will then be rotated just a few degrees, thereby releasing rotor structure 200 from any contact with arms 130 and 132. The sensor 100 is then pressed towards the throttle body, using locating pin 118 and tapered guides 116 to help align the sensor 100 with the throttle body. As long as protrusions 210 and 212 mate with indentations 134 and 136 outside the operating range of the sensor, no obstructions are present during sensor operation. Additionally, once the rotor 200 is released from arms 130 and 132, the rotor 200 is supported entirely upon the throttle shaft.

Having a rotor supported entirely by the throttle shaft creates several advantages, but not without issues that need to be addressed. A significant advantage is the lack of need for a return spring or bearing within the sensor package. This eliminates wear debris, reduces rotational torque, and does not impact adversely upon the return spring of the throttle shaft, which provides the feel of the accelerator to the engine operator.

However, the bearing in the prior art formed one part of an enclosed package that allowed the prior art sensors to be free-standing and environmentally protected. In the preferred embodiment, this issue is addressed in part by O-ring channel 182 and O-ring 180, both of which are most clearly visible in Figure 5. The O-ring 180 is deformed and retained between the sensor 100 and the throttle body (not shown) at the time of installation. This O-ring provides a seal between the throttle body and sensor 100, thereby protecting the internal portions of sensor 100 from the remainder of the engine compartment. The O-ring channel 182, groove 109 and rim 108 form an I-beam type construction, providing sufficient structural integrity to ensure good compression of O-ring 180.

Resistive element 150 is typically formed by screen printing conductive polymers upon a Kapton (Trade Mark) film, through the materials that make up element 150 are not the essential features to the construction. U.S. Patent No. 4 355 293 and other similar patents adequately illustrate the features of this type of element construction. The resistive element 150 is inserted into the housing, generally within and against the dome 105. One end of element 150 is captured in a pocket 142 comprised generally by a U-shaped wall 140 on a first end of the pocket 142 and two guide pieces 144 and 146 on the opposite end of the pocket 142. In practice, the element 150 would typically be inserted into the pocket 142 first at the U-shaped wall 140 and then slid down between the guide pieces 144 and 146. The pocket 142 serves to guide the insertion of the element 150 during assembly and also serves as a positive means for positioning the terminal end of element 150. Positioning is important since the element 150 must be connected through relativelv small terminations to the connector terminals 122, 124 and 126. Once the element 150 is inserted into the pocket 142, pressure wedge 400 is pressed into the pocket 142, forcing the element 150 against the exposed portions of connector terminals 122, 124 and 126. By virtue of this compression, sound electrical contact resistant to vibration is ensured.

The specific geometry of guides 144 and 146 is significant in ensuring correct deformation of the element 150 while preventing it from sagging into the region where the wedge 400 will be inserted. Too sharp a bend in the element 150 could result in destruction of the resistive and conductive coatings patterned thereupon, while an insufficient bend will result in the element 150 curving within pocket 142, exposing the element 150 to the possibility of being crushed upon insertion of the wedge 400.

Figure 5 shows in cross-sectional view the inside of the sensor 100. Many of the elements have already been described and will not be repeated. However, the cover 170 is shown in the installed positional. From the drawing it is apparent that the interior opening of the cover 170, closest to the rotor 200, has a diameter somewhat larger than required for the rotor 200. This provides a small amount of radial tolerance to the throttle shaft axial centre. This is desirable in case the rotor 200 centre is, prior to installation, not in exact axial alignment with the throttle shaft. Opening 168 also limits radial motion of the rotor 200 prior to throttle body installation, thereby preventing damage.

Also visible in Figure 5 are chambers 192 and 194 formed by the domes 105 and 106, respectively. Within the chamber 192 is element 150, contactor 300, and, in most cases, an amount of lubricant (not embodiment is throttle position sensing, the inventive features are applicable to position sensors in other applications, including but not limited to accelerator pedal position sensing, machine and industrial robot position sensing, and other applications for potentiometric devices of high quality and reliability.
EP-A-0353395 discloses a rotary position sensor for coupling to a device including a rotary component, said sensor comprising:
a stator for attachment to a body part of said device;
a rotor for attachment to said rotary component so as to be rotatable therewith relative to the stator;
means on said stator cooperating with means on said rotor for enabling an electrical representation to be obtained of the angular position of the rotor relative to the stator; and
cooperating formations provided on said rotor and on said stator for fixedly mounting the rotor to the stator, the arrangement being such that prior to installation of the sensor said formations fixedly mount the rotor to the stator for protecting the integrity of the sensor post-production and pre-installation and during installation said formations separate such that the rotor is unsupported by the stator and relies on the rotary component for support.
The invention provides a rotary position sensor for coupling to a device including a rotary component, said sensor comprising:
a stator for attachment to a body part of said device;
a rotor for attachment to said rotary component so as to be rotatable therewith relative to the stator;
means on said stator cooperating with means on said rotor for enabling an electrical representation to be obtained of the angular position of the rotor relative to the stator; and
cooperating formations provided on said rotor and on said stator for fixedly mounting the rotor to the stator, the arrangement being such that prior to installation of the sensor said formations fixedly mount the rotor to the stator for protecting the integrity of the sensor post-production and pre-installation and during installation said formations separate such that the rotor is unsupported by the stator and relies on the rotary component for support;
characterised in that:
during installation the cooperation between said formations is negated by causing a small amount of relative rotation between the rotor and the stator so as to separate the formations from each other, whereby the rotor is then separate from and unsupported by the stator and relies upon said rotary component for its support.
Further features of the present invention are set forth in the dependent claims.
The above and further features of the invention, together with advantages thereof, will be explained hereinafter by reference to an exemplary embodiment of the invention which is shown in the accompanying drawings
wherein:
Figures 1 to 3 illustrate a preferred embodiment in top, side and end view, respectively, in a pre-installed configuration;
Figure 4 illustrates the same embodiment as Figure 1, in bottom view with the cover removed to make visible the internal features;
Figure 5 illustrates the same embodiment as Figure 1 in a cross-sectional view;
Figures 6 to 8 illustrate the cover from side, end and bottom views, respectively;
Figures 9 to 12 illustrate the rotor without contactor in bottom, side, top and cross-section views, respectively;
Figure 13 illustrates a contactor structure suitable for use with the rotor of Figures 9 to 12;
Figure 14 illustrates the rotor and contactor in assembled configuration; and shown) upon the element 150.

During installation, the sensor 100 is pressed towards a throttle shaft. The throttle shaft should pass through throttle shaft opening 202, but in order to do so, the rotor structure 200 must be forced towards the throttle shaft. This force may be applied by axially moving the throttle shaft towards the dome 106. The force is then transmitted through the inner portion of the dome 106 to the rotor 200, causing the dome 106 and the rotor 200 to be in contact, as illustrated in Figure 5. After installation the throttle shaft will be returned to a natural axial position, causing the rotor structure 200 to move away from the dome 106. Ideally, rotor 200 will then be separated from any direct contact with the dome 106.

While throttle shafts typically suffer very little from radial motion (which would result in the rotor 200 being moved doser to one part or another of the cover 170), the shaft will typically have a considerable amount of axial motion. This axial motion will be translated into the contactor being moved transversely across the resistor tracks, which will not result in any change in output position sensing, which is correct. To maintain this integrity, resistors and conductors upon the element 150 are patterned to be wide enough such that axial motion of the throttle shaft will not cause the contactor 300 to move off the conductive patterns.

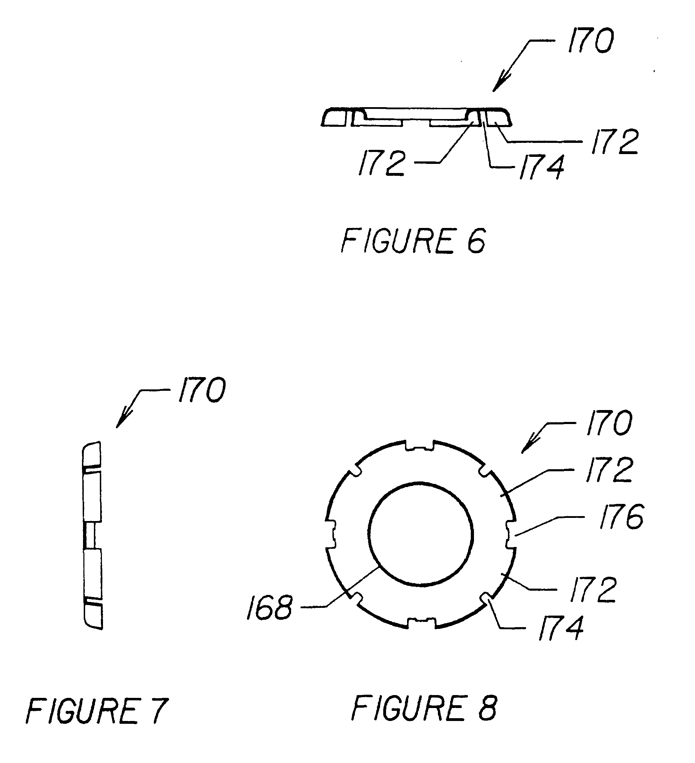

Figures 6 to 8 illustrate the cover in side, end and bottom views, respectively. The cover 170 has therein a large centre hole 168 of slightly larger diameter than the part of rotor structure 200 fitting therethrough. Additionally, the cover 170 has curved tabs 172 with spaces 174 and 176 interspersed between each tab 172. The tabs 172 form a flexible one-way engaging mechanism to engage the inner circumference of the lip 114. During installation, the cover 170 is pressed into the lip 114 and the tabs 172 resiliently flex towards the centre of the cover 170. However, removal of the cover 170 is prevented by the tabs 172 biting into the lip 114. The cover 170 may be made from a variety of materials, although a slightly resilient metal is preferred.

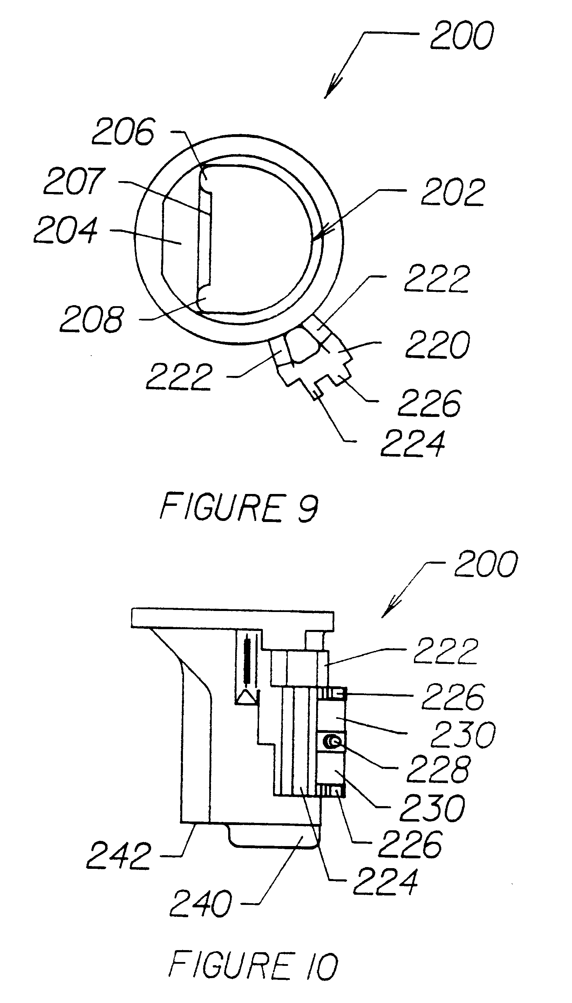

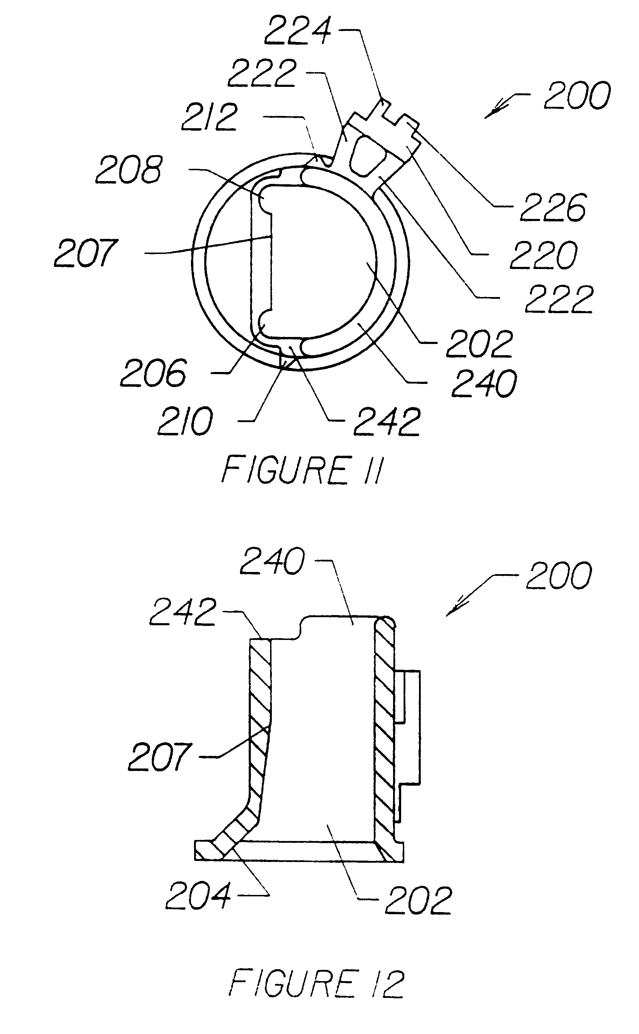

The rotor structure 200 is illustrated in Figures 9 to 12, and includes a throttle shaft opening 202. At a first end of the opening 202 is a tapered surface 204 which serves to facilitate alignment of the throttle shaft with the rotor structure 200. At an end of the opening 202 opposite the tapered surface 204 is a slight extension 240, which provides a bearing surface of less than full circle through which force may be applied to force the rotor structure 200 onto the throttle shaft. The extension 240 extends beyond end 242 of the opening 202 so that if there is undesired drag between the rotor structure 200 and the dome 106 this is minimised. Additionally, extending axially with the opening 202 are two long grooves 206 and 208, and a compression wedge 207 which engages a flat upon the throttle shaft to ensure exact alignment between the rotor structure and the throttle shaft. The compression wedge 207 restricts the opening 202 to a size just smaller than the shaft size, forcing the rotor structure 202 to flex slightly to allow the throttle shaft to pass therethrough. The grooves 206 and 208 provide lines of flexure while ensuring that the compression wedge 207 is retained tightly against the flat of the throttle shaft.

Extending on an exterior circumference of the rotor structure 200 are two arms 222 which join to form a contactor support block 220, which includes contactor support surfaces 230 for supporting a contactor such as the contactor 300, with contactor alignment edge 224 and alignment stubs 226. In production, the contactor 300 is set against surfaces 230 and is heat staked in place by thermally deforming small heat stake protrusion 228, edge 224 and stubs 226. This structure serves to support the contactor 300 and ensures tracking between contactor 300 and the throttle shaft.

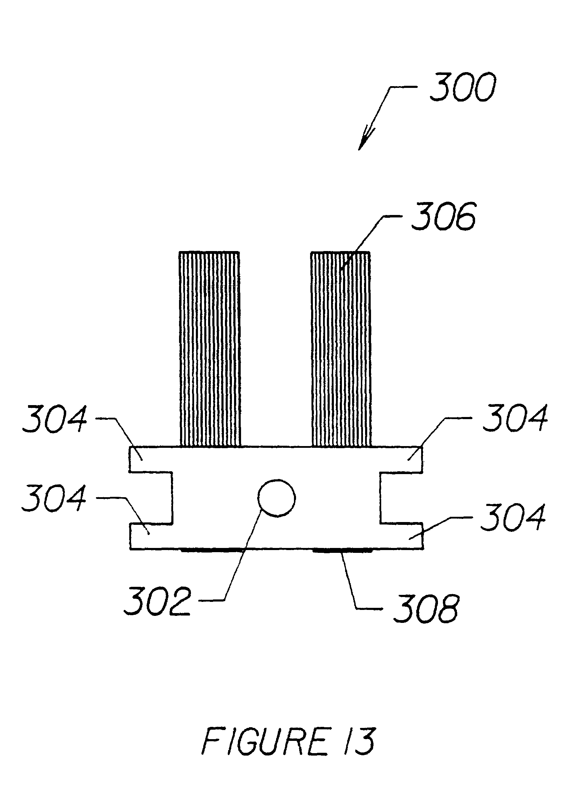

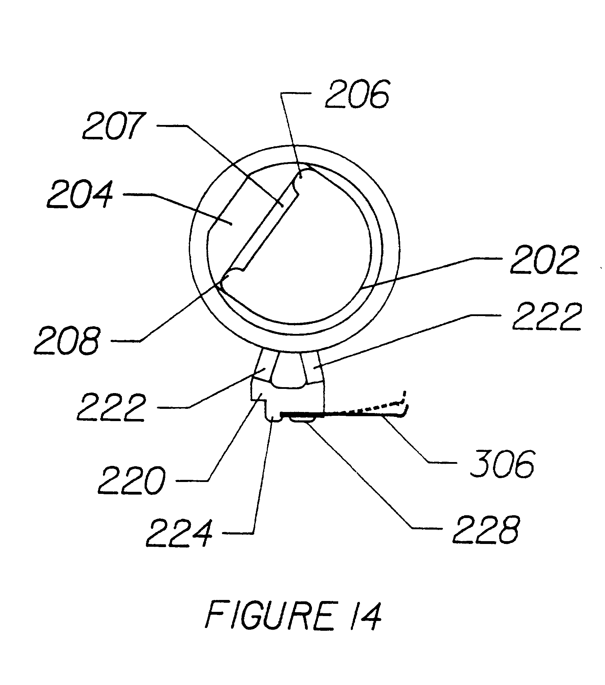

Figure 13 illustrates the contactor 300 in further detail and Figure 14 illustrates the rotor structure 200 interconnected to the contactor 300, which is shown with brushes 306 protruding away from opposite edge 308, although it will be immediately apparent to those skilled in the art that brushes are but one of many choices available for contactor structures. Other configurations include paddles, spoons, rakes, multi-fingered contacts, blades, and others. Four small tabs 304 engage with and partially surround on three sides alignment stubs 226. The centre of the contactor 300 has a small hole 302 through which fits the heat stake protrusion 228. In assembly, the edge 308 of contactor 300 is abutted with the alignment edge 224, the hole 302 is aligned with the heat stake protrusion 228, while the alignment stubs 226 are centred between the tabs 304. The contactor 300 is then pressed down against surfaces 230 and heat stake protrusion 228, edge 224 and stubs 226 are forced down to retain contactor 300 in place against surfaces 230.

Figures 15 to 18 illustrate the pressure wedge 400 in more detail. The wedge 400 is formed from a resilient material with high spring retention. Suitable materials include beryllium copper, phosphor bronze, spring steel and other similar materials. Plastics may alternatively be used, although a sufficient spring force must be generated to ensure sound electrical contact through temperature extremes.

The wedge 400 has several protrusions 402 extending therefrom, which act as force concentrators and so are designed to press particularly against the resistive element 150 only in those places where the element 150 is to make sound electrical contact with the electrical connector terminals 122, 124 and 126. In an uncompressed state, the wedge 400 takes on a V-shape from side view, as illustrated in Figure 17. The base 404 of the wedge is joined and forms approximately a 30 degree included angle. Since there are three electrical connector terminals 122, 124 and 126 in the preferred embodiment, there are six legs extending from the base 404. While only two legs would be necessary at a minimum (one for each side of the V-shape) adding a leg for each protrusion 402 provides resilience for each contact point independent of each other. This is of value in increasing the tolerance for slight differences in each termination. While strictly speaking, this still only accounts for a total of four legs, by adding six and making the wedge fully symmetrical, there is no need for special orientation of the wedge upon insertion. This eases the assembly operations required to insert the wedge 400 into the sensor 100.

Figure 15 illustrates the wedge 400 as it would appear inserted into the pocket 142. The wedge in this compressed state takes on a more U-shaped geometry, with the protrusions 402 extending oppositely therefrom.

While the foregoing details a preferred embodiment of the invention, various modifications are possible within the scope of the claims hereinafter given.

## Claims

1. A rotary position sensor for coupling to a device including a rotary component, said sensor comprising:
a stator for attachment to a body part of said device;
a rotor (200) for attachment to said rotary component so as to be rotatable therewith relative to the stator;
means (150) on said stator cooperating with means (300) on said rotor (200) for enabling an electrical representation to be obtained of the angular position of the rotor (200) relative to the stator ; and cooperating formations (134, 136, 210, 212) provided on said rotor (200) and on said stator for fixedly mounting the rotor (200) to the stator,
the arrangement being such that prior to installation of the sensor said formations (134, 136, 210, 212) fixedly mount the rotor to the stator for protecting the integrity of the sensor post-production and pre-installation and during installation said formations separate such that the rotor is unsupported by the stator and relies on the rotary component for support; **characterised in that**: during installation the cooperation between said formations (134, 136, 210, 212) is negated by causing a small amount of relative rotation between the rotor (200) and the stator so as to separate the formations (134, 136, 210, 212) from each other, whereby the rotor (200) is then separate from and unsupported by the stator and relies upon said rotary component for its support.

2. A rotary position sensor as claimed in claim 1, wherein the stator is formed with a recess for receiving the rotor (200) the recess having a large enough diameter for there to be radial tolerance between the stator and the rotor, and said cooperating formations (134, 136 210, 212) comprise projections (210, 212) on one of the rotor (200) and stator which are engageable in recesses (134, 136) on the other of said rotor (200) and stator when the rotor (200) and stator are in a certain angular position with respect to each other.

3. A rotary position sensor as claimed in claim 1 or 2, wherein said means (150, 300) for enabling an electrical representation to be obtained of the angular position of the rotor (200) relative to the stator comprises an elongate resistive component (150) and a contactor (300) arranged to electrically contact said elongate resistive component (150) at different locations along its length in dependence upon the relative angular positions of the rotor (200) and the stator.

4. A rotary position sensor as claimed in claim 3, wherein said stator comprises a hollow cylindrical component, said elongate resistive component (150) extends part way around the internal circumference of said hollow cylindrical component, said rotor (200) is adapted to be received within said hollow cylindrical component with spacing therefrom, and electrical contact means (300) extends from said rotor (200) into electrical contact with said elongate resistive component (150).

5. A rotary position sensor as claimed in claim 4, wherein said elongate resistive component (150) comprises an elongate strip and said hollow cylindrical component is formed with a recess (142) which receives a terminal end of said strip (150), the strip extending from said recess (142) part way around the internal circumference of said hollow cylindrical component.

6. A rotary position sensor as claimed in claim 5, wherein electrical connector parts (122, 124, 126) for making electrical connection to said sensor are provided on said stator and include terminal portions accessible in said recess (142), and a pressure element (400) is inserted into said recess (142) to urge the terminal end of the strip resistive component (150) into electrical contact with said terminal portions of said electrical connector parts (122, 124, 126).

7. A rotary position sensor as claimed in any of the preceding claims, wherein the rotor (200) is formed with an axial recess (202) for receiving the end of a rotary shaft.

8. A rotary position sensor as claimed in claim 7, wherein said recess (202) has a generally D-shaped cross-section for making positive engagement with a flat on the rotary shaft.

9. A rotary position sensor as claimed in claim 8, wherein the cross-section of the recess (202) reduces as a function of depth into the recess (202).

10. A rotary position sensor as claimed in any of the preceding claims, wherein the stator is formed with a recess for receiving said rotor (200) the recess having a large enough diameter for there to be radial tolerance between the stator and the rotor and said rotor (200) has a formation (240) thereon to reduce the area of contact between it and the stator, if such contact should occur, to less than the area of contact if said formation (240) were not present.

## Patentansprüche

1. Drehstellungssensor zum Koppeln an ein Gerät, das ein drehendes Bauteil enthält, der Sensor umfassend:
einen Stator zur Befestigung an einem Gehäuseteil des Geräts;
einen Rotor (200) zur Befestigung an dem drehenden Bauteil, um mit diesem zusammen relativ zum Stator drehbar zu sein;
eine Einrichtung (150) am Stator, die mit einer Einrichtung (300) am Rotor (200) zusammenwirkt, um eine elektrische Entsprechung zur Winkelstellung des Rotors (200) relativ zum Stator erhalten zu können; und
zusammenwirkende Gebilde (134, 136, 210, 212), die an dem Rotor (200) und an dem Stator vorgesehen sind, um den Rotor (200) am Stator zu befestigen, wobei die Anordnung so ist, daß die Gebilde (134, 136, 210, 212) vor der Installation des Sensors den Rotor (200) am Stator befestigen, um das Gerät nach der Produktion und vor der Installation zu schützen, und während der Installation trennen, so daß der Rotor (200) nicht vom Stator gestützt wird und für seinen Halt auf das drehbare Bauteil angewiesen ist,
**dadurch gekennzeichnet, daß** während der Installation das Zusammenwirken zwischen den Gebilden (134, 136, 210, 212) durch Erzeugen einer Drehung des Rotors (200) um einen kleinen Betrag relativ zum Stator aufgehoben wird, um die Gebilde (134, 136, 210, 212) voneinander zu trennen, wobei der Rotor (200) dann getrennt und ungestützt vom Stator ist und für seinen Halt auf das drehende Bauteil angewiesen ist.

2. Drehstellungssensor nach Anspruch 1, wobei der Stator mit einer Ausnehmung zur Aufnahme des Rotors (200) versehen ist, der Durchmesser der Ausnehmung genügend groß ist, um ein Radialspiel zwischen dem Stator und dem Rotor zu erhalten, und die zusammenwirkenden Gebilde (134, 136, 210, 212) Nasen (210, 212) umfassen, jeweils eine am Rotor (200) und eine am Stator , die in Rücksprünge (134, 136), jeweils einer am Rotor (200) und einer am Stator , eingreifen können, wenn sich der Rotor (200) und der Stator in einer bestimmten Winkelstellung zueinander befinden.

3. Drehstellungssensor nach Anspruch 1 oder 2, wobei die Einrichtungen (150, 300), die es ermöglichen, eine elektrische Entsprechung zur Winkelstellung des Rotors (200) relativ zum Stator zu erhalten, ein längliches Widerstandsbauteil (150) umfassen und ein Kontakt (300) so angeordnet ist, daß er einen elektrischen Kontakt an verschiedenen Stellen entlang des länglichen Widerstandsbauteils (150) in Abhängigkeit zur relativen Winkelstellung zwischen Rotor (200) und Stator herstellt.

4. Drehstellungssensor nach Anspruch 3, wobei der Stator ein hohles Zylinderbauteil umfaßt, das längliche Widerstandsbauteil (150) sich um einen Teil des Umfangs des hohlen zylindrischen Bauteils erstreckt, der Rotor (200) dazu geeignet ist, innerhalb des hohlen Zylinderbauteils mit einem Abstand dazu aufgenommen zu werden, und sich elektrische Kontakte (300) vom Rotor (200) erstrecken und einen elektrischen Kontakt mit dem länglichen Widerstandsbauteil (150) herstellen.

5. Drehstellungssensor nach Anspruch 4, wobei das längliche Widerstandsbauteil (150) einen länglichen Streifen umfaßt und das hohle zylindrische Bauteil mit einer Aussparung (142) versehen ist, die das Anschlußende des Streifens (150) aufnimmt, und sich der Streifen von der Aussparung (142) aus um einen Teil des inneren Umfangs des hohlen zylindrischen Bauteils erstreckt.

6. Drehstellungssensor nach Anspruch 5, wobei elektrische Verbindungsstücke (122, 124, 126) am Stator vorgesehen sind, um eine elektrische Verbindung zum Sensor zu bilden, und Anschlußstücke einschließen, die in der Aussparung (142) zugänglich sind, und ein Druckelement (400) in die Aussparung (142) eingesetzt ist, um das Anschlußende des Streifens des Widerstandsbauteils (150) in elektrischen Kontakt mit den Anschlußstücken der elektrischen Verbindungsstücke (122, 124, 126) zu bringen.

7. Drehstellungssensor nach einem der vorhergehenden Ansprüche, wobei der Rotor (200) mit einer axialen Ausnehmung (202) zur Aufnahme eines Wellenendes versehen ist.

8. Drehstellungssensor nach Anspruch 7, wobei die Ausnehmung (202) einen im wesentlichen D-förmigen Querschnitt aufweist, um einen Formschluß mit einer Abflachung an der Welle zu bilden.

9. Drehstellungssensor nach Anspruch 8, wobei sich der Querschnitt der Ausnehmung (202) als Funktion der Tiefe der Ausnehmung (202) vermindert.

10. Drehstellungssensor nach einem der vorhergehenden Ansprüche, wobei der Stator mit einer Ausnehmung zur Aufnahme des Rotors (200) versehen ist und die Ausnehmung, die einen genügend großen Durchmesser hat, damit ein Radialspiel zwischen dem Stator und dem Rotor (200) besteht, einen Vorsprung (240) hat, um die Kontaktfläche zwischen dem Vorsprung und dem Stator so zu verringern, daß, wenn ein solcher Kontakt auftreten sollte, die Kontaktfläche kleiner als die Kontaktfläche ohne den Vorsprung (240) wäre.

## Revendications

1. Détecteur de position de rotation destiné à être couplé à un dispositif comprenant un composant rotatif, ledit détecteur comportant :
un stator destiné à être fixé à une partie du corps dudit dispositif ;
un rotor (200) destiné à être fixé audit composant rotatif de façon à pouvoir tourner avec ce dernier par rapport au stator ;
des moyens (150) prévus sur ledit stator coopérant avec des moyens (300) prévus sur ledit rotor (200) pour permettre l'obtention d'une représentation électrique de la position angulaire du rotor (200) par rapport au stator ; et
des formations (134, 136, 210, 212) coopérant les unes avec les autres qui sont prévues sur ledit rotor (200) et sur ledit stator pour monter le rotor (200) de manière fixe sur le stator, les dispositions prises étant de telle nature que, avant l'installation du détecteur, lesdites formations (134, 136, 210, 212) assurent le montage fixe du rotor sur le stator pour protéger l'intégrité du détecteur au cours de la post-fabrication et de la pré-installation, et pendant l'installation, lesdites formations se séparent de telle sorte que le rotor n'est pas supporté par le stator et est dépendant, pour être supporté, du composant rotatif ;
**caractérisé en ce que** pendant l'installation, la coopération entre lesdites formations (134, 136, 210, 212) est annulée grâce à une faible rotation relative entre le rotor (200) et le stator de manière à séparer les unes des autres les formations (134, 136, 210, 212), si bien que le rotor (200) est alors séparé du stator, et non supporté par celui-ci, et qu'il dépend, pour être supporté, dudit composant rotatif.

2. Détecteur de position de rotation selon la revendication 1, dans lequel le stator est formé de manière à comporter un évidement destiné à recevoir le rotor (200), le diamètre de l'évidement étant assez important pour qu'il existe une tolérance radiale entre le stator et le rotor, et lesdites formations (134, 136, 210, 212) coopérant les unes avec les autres comportent des saillies (210, 212), prévues soit sur le rotor (200), soit sur le stator, qui sont aptes à s'engager dans des évidements (134, 136), prévus sur l'autre des deux éléments, à savoir ledit rotor (200) ou ledit stator, lorsque le rotor (200) et le stator se trouvent à une position angulaire donnée l'un par rapport à l'autre.

3. Détecteur de position de rotation selon la revendication 1 ou 2, dans lequel lesdits moyens (150, 300) destinés à permettre l'obtention d'une représentation électrique de la position angulaire du rotor (200) par rapport au stator sont constitués d'un composant résistif allongé (150) et d'un contacteur (300) disposé de façon à se trouver en contact électrique avec ledit composant résistif allongé (150) en différents emplacements sur sa longueur en fonction des positions angulaires relatives du rotor (200) et du stator.

4. Détecteur de position de rotation selon la revendication 3, dans lequel ledit stator comporte un composant cylindrique creux, ledit composant résistif allongé (150) s'étend sur une partie de la circonférence interne dudit composant cylindrique creux, ledit rotor (200) est adapté pour être reçu à l'intérieur dudit composant cylindrique creux en étant espacé par rapport à ce dernier, et le moyen de contact électrique (300) s'étend depuis ledit rotor (200) jusqu'à entrer en contact électrique avec ledit composant résistif allongé (150).

5. Détecteur de position de rotation selon la revendication 4, dans lequel le composant réslstif allongé (150) est constitué d'une bande allongée et ledit composant cylindrique creux est formé de manière à comporter un évidement (142) qui reçoit une extrémité formant borne de ladite bande (150), la bande s'étendant depuis ledit évidement (142) sur une partie de la circonférence interne dudit composant cylindrique creux.

6. Détecteur de position de rotation selon la revendication 5, dans lequel des parties de connexion électrique (122, 124, 126) destinés à établir une connexion électrique avec ledit détecteur sont prévues sur ledit stator et comprennent des parties formant borne accessibles dans ledit évidement (142), et un élément (400) d'application de pression est inséré dans ledit évidement (142) pour solliciter l'extrémité formant borne du composant résistif en forme de bande (150) de sorte qu'elle entre en contact électrique avec lesdits parties formant borne desdites parties de connexion électrique (122, 124, 126).

7. Détecteur de position de rotation selon l'une quelconque des revendications précédentes, dans lequel le rotor (200) est formé de manière à comporter un évidement axial (202) destiné à recevoir l'extrémité d'un arbre rotatif.

8. Détecteur de position de rotation selon la revendication 7, dans lequel ledit évidement (202) a une section transversale généralement en forme de D destinée à porter de façon positive contre un méplat prévu sur l'arbre rotatif.

9. Détecteur de position de rotation selon la revendication 8, dans lequel la section transversale de l'évidement (202) se réduit en fonction de la profondeur vers l'intérieur de l'évidement (202).

10. Détecteur de position de rotation selon l'une quelconque des revendications précédentes, dans lequel le stator est formé de manière à comporter un évidement destiné à recevoir ledit rotor (200), le diamètre de l'évidement étant assez important pour qu'il existe une tolérance radiale entre le stator et le rotor, et une formation (240) est prévue sur ledit rotor (200) pour réduire la zone de contact entre ce dernier et le stator, au cas où un tel contact devrait se produire, à une zone de contact inférieure à celle qui existerait si ladite formation (240) n'était pas présente.
